(19) Europäisches Patentamt / European Patent Office / Office européen des brevets

(11) **EP 4 284 625 B1**

(12) **FASCICULE DE BREVET EUROPEEN**

(45) Date de publication et mention
de la délivrance du brevet:
**13.11.2024 Bulletin 2024/46**

(21) Numéro de dépôt: **22705434.3**

(22) Date de dépôt: **24.01.2022**

(51) Classification Internationale des Brevets (IPC):
*B29C 59/02* (2006.01)     *G02B 5/02* (2006.01)

(52) Classification Coopérative des Brevets (CPC):
**B29C 59/022; G02B 5/0226;** B29C 59/026;
B29C 2059/023; B29C 2059/028

(86) Numéro de dépôt international:
**PCT/FR2022/050123**

(87) Numéro de publication internationale:
**WO 2022/162297 (04.08.2022 Gazette 2022/31)**

(54) **REVETEMENT DE SURFACE NANOSTRUCTUREE POUR GENERER DES NOUVELLES APPARENCES VISUELLES**

NANOSTRUKTURIERTE OBERFLÄCHENBESCHICHTUNG ZUR ERZEUGUNG NEUARTIGER VISUELLER ERSCHEINUNGEN

NANOSTRUCTURED SURFACE COATING FOR GENERATING NOVEL VISUAL APPEARANCES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.02.2021 FR 2100948**

(43) Date de publication de la demande:
**06.12.2023 Bulletin 2023/49**

(73) Titulaires:
• **UNIVERSITE DE BORDEAUX**
**33000 Bordeaux (FR)**
• **Centre National de la Recherche Scientifique (CNRS)**
**75016 Paris (FR)**
• **Institut d'Optique Théorique et Appliquée**
**91120 Palaiseau (FR)**
• **Université Paris-Saclay**
**91190 Gif-sur-Yvette (FR)**

(72) Inventeurs:
• **LALANNE, Philippe**
**33400 Talence (FR)**
• **VYNCK, Kevin**
**33000 Bordeaux (FR)**
• **PACANOWSKI, Romain**
**33240 Cubzac les Ponts (FR)**
• **GRANIER, Xavier**
**33400 Talence (FR)**

(74) Mandataire: **Plasseraud IP**
**104 Rue de Richelieu**
**CS92104**
**75080 Paris Cedex 02 (FR)**

(56) Documents cités:
FR-A1- 3 062 348      FR-A1- 3 073 321
US-A1- 2020 025 981

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine technique

La présente divulgation relève du domaine de l'interaction entre la lumière et la surface d'un objet. Plus particulièrement, la présente divulgation concerne un revêtement de surface nanostructurée apte à contrôler l'interaction entre la lumière et la surface nanostructurée pour générer des nouvelles apparences visuelles.

### Technique antérieure

L'apparence visuelle d'un objet résulte de l'interaction entre la lumière et la matière constituant la surface de l'objet. Les apparences visuelles d'un objet sont classées principalement en cinq classes : forme, texture, brillant, translucidité, couleur. Les premières classes d'apparence sont plus des attributs géométriques et les trois dernières sont liées à la nature de l'objet. Il est par exemple connu que la couleur naît de l'absorption sélective par la matière et de la diffusion de la lumière non absorbée. La brillance de la surface d'un objet provient de la réflexion de la lumière sur la surface externe de l'objet. La translucidité résulte des propriétés de diffusion en volume et en surface de l'objet. Ainsi, il est nécessaire de changer de matériau, de manière à changer l'indice de réfraction optique et/ou créer des systèmes multicouches complexes pour pouvoir faire varier les paramètres spectraux, angulaires et spatiaux de la lumière réfléchie ou transmise par l'objet.

Les diverses techniques pour contrôler l'apparence visuelle utilisent des microstructures dont la taille est plus grande que la longueur d'onde de la lumière visible, généralement λ=500 nm, ne permettant pas de générer toutes les apparences visuelles possibles.

Dans les systèmes multicouches, afin de produire des interférences contrôlées au niveau des interfaces entre les différentes couches, il est nécessaire de contrôler parfaitement la technique de dépôt. En outre, un tel système multicouche ne permet pas de générer des effets visuels qui changent arbitrairement en fonction de la direction d'observation et de la direction de la lumière incidente.

La présente divulgation propose une surface nanostructurée composée de particules ayant un fort indice de réfraction, de dimension nanométrique (de l'ordre de la dizaine ou centaine de nanomètres) et une distribution spatiale aléatoire mais contrôlée pour induire des interférences fortes entre des lumières diffusés par les particules afin de générer des nouvelles apparences qui présentent des couleurs résilientes aux directions d'éclairage et d'observation et des apparences qui varient avec ces directions.

Les surfaces comprenant des éléments nanométriques espacés de manière aléatoire d'une distance de l'ordre de la longueur d'onde de la lumière visible sont principalement utilisées pour l'absorption. Dans la présente divulgation, les auteurs montrent qu'il est possible qu'en contrôlant un certain nombre de paramètres d'une telle surface, il est possible de générer des apparences visuelles nouvelles.

Lorsque la lumière éclaire une surface comprenant un ensemble de particules distribuées de manière désordonnées, la diffusion de la lumière est régie par la taille, la forme, l'indice optique, l'agencement et la densité des particules dispersées dans un milieu qui est homogène. Les interférences entre la lumière diffusée par les centres diffuseurs que sont ces particules peuvent jouer alors un rôle important dans la génération des apparences visuelles.

Pour la suite de la divulgation, la surface nanostructurée est considérée comme un système bidimensionnel ; c'est-à-dire une couche d'épaisseur finie et constante.

Le document FR 3 073 321 A1 décrit un revêtement de surface nanostructurée selon le préambule de la revendication 1.

### Résumé

La présente divulgation vient améliorer la situation.

Il est proposé un revêtement de surface nanostructurée configurée pour générer des apparences visuelles dans une bande spectrale visible, ledit revêtement comprenant :

- une première couche comprenant une distribution aléatoire de nanoparticules;
- un substrat sur lequel est agencée la première couche;
- les nanoparticules ayant un indice optique de réfraction $n_{part}$ présentant une valeur adaptée pour diffuser chacune individuellement la lumière incidente ;
- les nanoparticules étant agencées de sorte que la distance moyenne entre deux particules voisines d est définie selon la relation suivante de manière à produire une interférence entre la lumière diffusée par les particules:

$$2\,R \le d \le \max\,(\lambda\,/\,n_p),$$

R: le rayon géométrique le plus petit d'un cercle englobant la particule
λ : la longueur d'onde la plus grande du spectre visible
$n_p$ : l'indice de réfraction optique du milieu de la première couche dans laquelle sont dispersées les nanoparticules.

Selon un mode de réalisation, le revêtement de surface nanostructurée comprend en outre une deuxième couche agencée entre le substrat et la première couche de nanoparticules :

- ladite deuxième couche ayant une épaisseur h inférieure ou égale à la longueur d'onde la plus grande de la bande spectrale dans la deuxième couche : $0 \leq h \leq \max(\lambda/n_{sup})$, $n_{sup}$ étant l'indice de réfraction de la deuxième couche.

Selon un mode de réalisation, la deuxième couche est réalisée dans un matériau dont l'indice de réfraction est compris entre 1,3 et 2 et choisi parmi les matériaux suivants : $SiO_2$, sol gel, TiO2, $Sl_3N_4$, des polymères et des oxydes.

Selon un autre mode de réalisation, les nanoparticules sont agencées de sorte que le degré de corrélation p entre les particules est contrôlé selon la relation suivante :

$$\rho\pi R^2 \leq p \leq 0.69$$

p est définie par la relation suivante : $\rho\pi R^2_{excl}$, $R_{excl}$ étant le rayon d'exclusion définissant un espace autour de la nanoparticule qui exclut la présence d'une autre nanoparticule ;

R: le rayon géométrique le plus petit d'un cercle englobant la particule ;

$\rho$ : densité surfacique d'un ensemble de particules définie par la relation $1/d^2$, où d étant la distance moyenne entre deux centres de masse des particules qui sont les plus proches voisines.

Les caractéristiques exposées dans les paragraphes suivants peuvent, optionnellement, être mises en oeuvre, indépendamment les unes des autres ou en combinaison les unes avec les autres :

Le substrat est réalisé dans un matériau dont l'indice de réfraction est compris entre 1,3 et 4 et choisi parmi les matériaux suivants : Si, AsGa, quartz, silice, polymère.

Le matériau formant la première couche dans laquelle sont dispersées les nanoparticules a un indice de réfraction $n_p$ compris entre 1 et 2, $n_p$ étant choisi de manière à être inférieur à l'indice de réfraction des nanoparticules.

Les nanoparticules sont réalisées dans un matériau dont l'indice de réfraction est supérieur ou égal à 1,4.

Les nanoparticules sont réalisées dans un matériau diélectrique ou métallique choisi parmi l'un des matériaux suivants : argent, or, aluminium, silicium, germanium, dioxyde de titane, polymère, nitrure de silicium.

Les nanoparticules présentent une forme cylindrique, une forme sphérique, une forme cubique ou tout autre forme géométrique.

Les nanoparticules présentent un taux de remplissage surfacique f compris entre 5 et 30 %.

**Brève description des dessins**

D'autres caractéristiques, détails et avantages apparaîtront à la lecture de la description détaillée ci-après, et à l'analyse des dessins annexés, sur lesquels :

**Fig. 1**

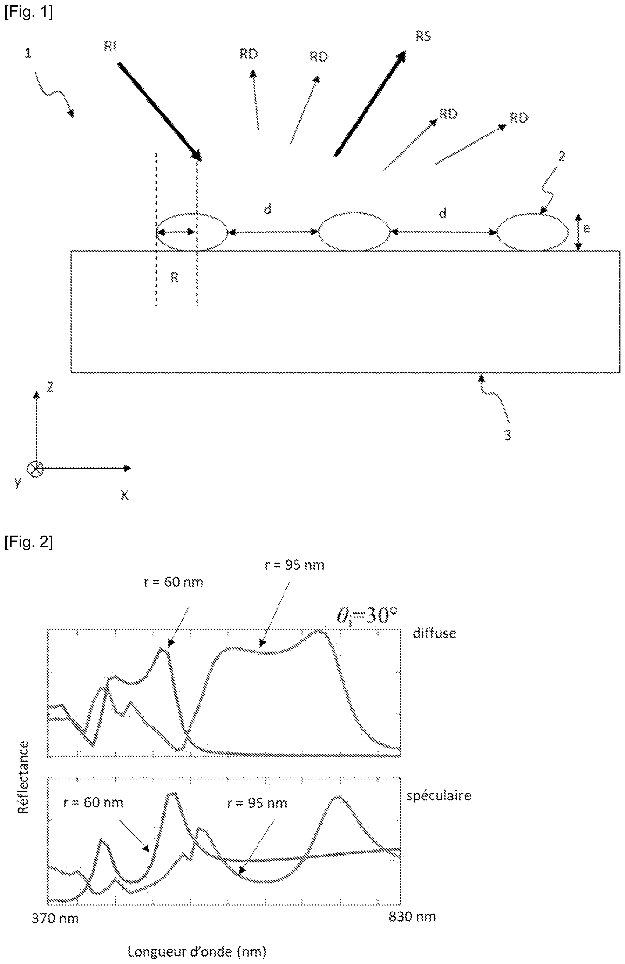

[Fig. 1] montre un revêtement de surface nanostructurée selon un premier mode de réalisation comprenant une monocouche de nanoparticules sur la surface d'un substrat ;

**Fig. 2**
[Fig. 2] montre respectivement (a) deux spectres de réflectance de diffusion pour des particules sphériques de rayon R = 60 nm et R = 95 nm (b) et deux spectres de réflectance spéculaire pour des particules de rayon R = 60 et R = 95 nm ;

**Fig. 3**

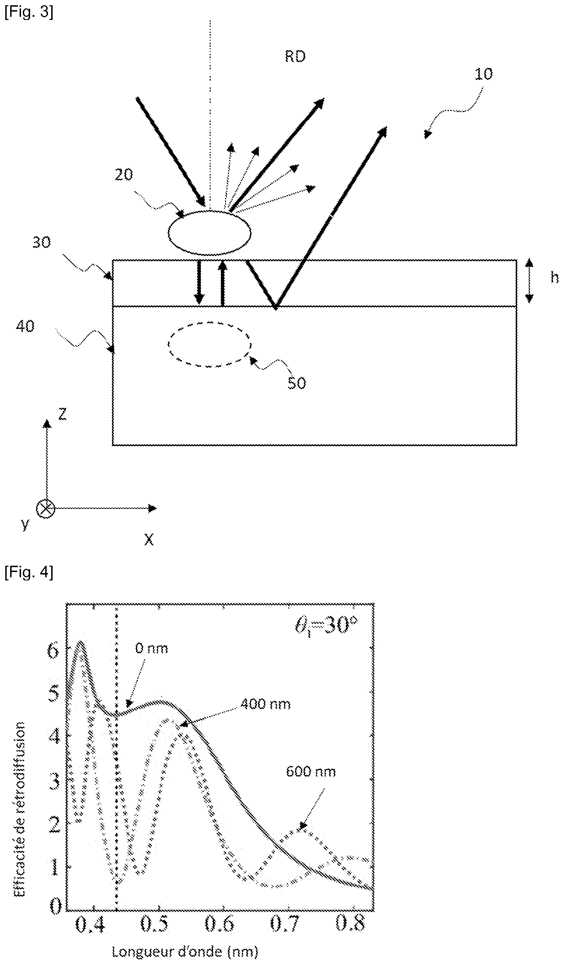

[Fig. 3] montre un revêtement de surface nanostructurée selon un deuxième mode de réalisation comprenant une première monocouche de nanoparticules, un substrat, et une deuxième couche dite couche support de nanoparticules agencée entre la première couche de nanoparticules et le substrat ;

**Fig. 4**
[Fig. 4] montre trois courbes d'efficacité de rétrodiffusion calculés pour un angle d'incidence $\theta i = 30°$ pour un revêtement comprenant une première monocouche de nanoparticules d'argent de rayon R = 90 nm, un substrat en Si et une deuxième couche support en $SiO_2$ présentant respectivement une épaisseur nulle (h = 0), une épaisseur h = 400 nm et une épaisseur h = 600 nm ;

**Fig. 5**

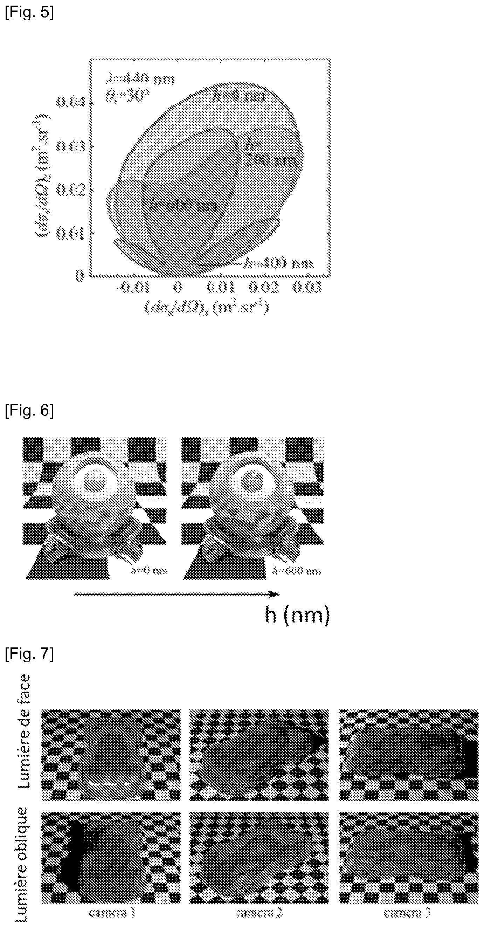

[Fig. 5] montre des diagrammes de rayonnement angulaires calculés pour un angle d'incidence $\theta i = 30°$ et une longueur d'onde $\lambda = 440$ nm pour un revêtement comprenant une première monocouche de particules d'argent de rayon R = 90 nm, un substrat en Si et une deuxième couche support en $SiO_2$ présentant une épaisseur nulle (h = 0), une épaisseur h = 200 nm, une épaisseur h = 400 nm et une épaisseur h = 600 nm ;

**Fig. 6**
[Fig. 6] montre des images de simulations montrant les apparences visuelles d'un objet sphérique muni d'un revêtement de surface nanostructurée comprenant une première monocouche de particules d'argent de rayon R = 90 nm, un substrat en Si et une deuxième couche de support de nanoparticules $SiO_2$ présentant une épaisseur nulle (h = 0) et une épaisseur h = 600 nm ;

**Fig. 7**
[Fig. 7] montre des images de simulations montrant les apparences visuelles d'un objet muni d'un revêtement de surface nanostructurée comprenant une monocouche de particules d'argent de rayon R = 90 nm, un substrat en Si et une deuxième couche sup-

port SiO$_2$ présentant une épaisseur h = 600 nm selon trois directions d'observation et deux directions de la lumière incidente ;

**Fig. 8**

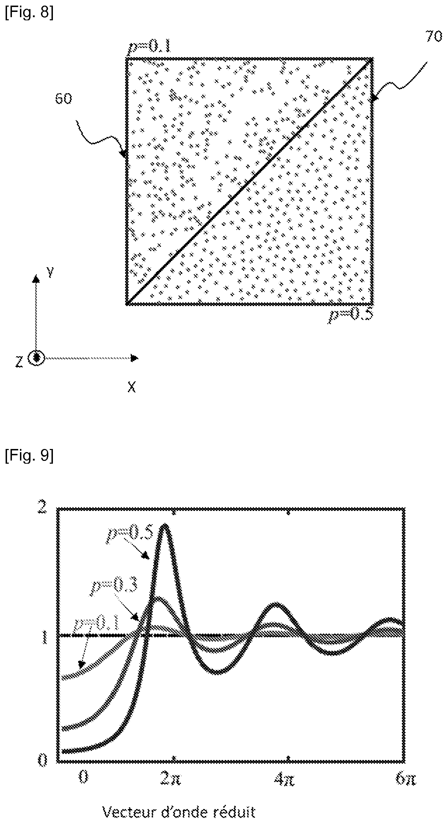

[Fig. 8] montre une vue de dessus d'un revêtement de surface nanostructurée selon un troisième mode de réalisation de l'invention dans laquelle le degré de corrélation entre les particules p est varié pour une même densité de particules, ici p = 0.1 et p = 0.5 ;

**Fig. 9**

[Fig. 9] montre des courbes de facteur de corrélation structurelle S calculé pour trois degrés de corrélation structurelle p = 0.5, p = 0.3 et p = 0.1 en fonction du vecteur d'onde q dans le plan ;

**Fig. 10**

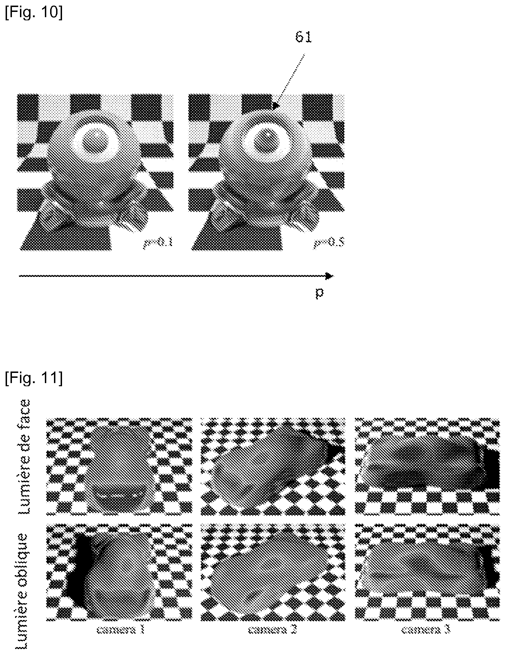

[Fig. 10] montre des images de simulations montrant les apparences visuelles d'un objet sphérique muni d'un revêtement de surface nanostructurée comprenant une monocouche de particules d'argent de rayon r = 90 nm déposée sur un substrat absorbant en verre pour un degré de corrélation p = 0.1 et p = 0.5 ;

**Fig. 11**

[Fig. 11] montre des images de simulations montrant les apparences visuelles d'un objet muni d'un revêtement de surface nanostructurée comprenant une monocouche de particules d'argent de rayon R = 90 nm déposé sur un substrat en SiO$_2$ pour un degré de corrélation p = 0.5 selon trois directions d'observation et deux directions de la lumière incidente.

**Description des modes de réalisation**

En référence à la figure 1, un revêtement de surface nanostructurée 1 selon un premier mode de réalisation est décrit ci-dessous. Ce revêtement a notamment pour but de générer des nouvelles apparences visuelles résultant des interférences liées à la lumière diffuse et à la lumière spéculaire par la surface nanostructurée.

Le revêtement de surface nanostructurée comprend une première couche comprenant une distribution aléatoire de nanoparticules 2 et un substrat 3 sur lequel est agencée la couche de nanoparticules 2. Le substrat définit une surface dans un plan (X, Y) qui selon la divulgation est planaire ou légèrement rugueuse.

Selon une première variante de réalisation comme illustrée sur la figure 1, la première couche de nanoparticules est formée d'un ensemble de nanoparticules distribuées de manière aléatoire à la surface du substrat.

Selon une deuxième variante de réalisation de l'invention non illustrée, les particules sont incorporées dans une couche de protection. La couche de protection est réalisée dans un matériau d'indice de réfraction faible compris entre 1 et 2. A titre d'exemple, la couche de protection est en SiO$_2$ ou en plastique. La couche de protection présente une épaisseur comprise entre quelques centaines de nanomètres et plusieurs centaines de micromètres.

Les nanoparticules sont distribuées de manière aléatoire dans le plan (X, Y). Dans la direction Z qui est perpendiculaire au plan (X, Y), les particules présentent une hauteur sensiblement constante et forment une monocouche de particules. Selon un exemple de réalisation illustré sur la figure 1, les particules présentent une forme ellipsoïdale et sont orientées avec la même hauteur correspondant à l'épaisseur de la monocouche. Dans le cas d'une sphère, le rayon de la sphère correspond à l'épaisseur de la monocouche. Dans le cas d'un cylindre, la hauteur du cylindre correspond à l'épaisseur de la monocouche.

Les nanoparticules ont un indice de réfraction optique complexe n+ik, n étant la partie réelle correspondant à l'indice de réfraction et k la partie imaginaire appelée coefficient d'extinction. Les nanoparticules ont un indice optique de réfraction supérieur à celui de la couche de protection. Les particules ont un fort indice optique compris entre 1.4 et 4 afin de diffuser fortement la lumière incidente. Les particules peuvent être réalisées dans un matériau métallique de forts indices, par exemple en or, argent ou aluminium. Elles peuvent être également réalisées dans un matériau diélectrique de forts indices, par exemple en silicium ou en dioxyde de titane. Elles peuvent être aussi en polystyrène ; elles présentent alors un indice d'environ 1.5, susceptible de produire des effets nouveaux.

Les particules présentent un rayon géométrique noté R qui est inférieur à la longueur d'onde du spectre visible. Elles peuvent présenter différentes formes géométriques, sphères, cubes, bâtonnets. Par rayon géométrique, on entend le rayon d'un cercle le plus petit qui englobe la particule. Les particules peuvent être des particules sphériques, des particules cylindriques, des particules. Dans le cas où la particule est une sphère ou un cylindre, le rayon géométrique correspond au rayon de la particule. Le rayon géométrique est compris généralement entre 30 nm et 300 nm, de préférence entre 70 nm et 150 nm. Du fait de sa dimension nanométrique, dans la suite de la description, les particules sont désignées par le terme « nanoparticules » et la surface de la couche comprenant les nanoparticules par le terme « surface nanostructurée ».

De préférence, le taux de remplissage surfacique est compris entre 0.01 et 0.7, de préférence entre 0.01 et 0.35. Par taux de remplissage surfacique, on entend le rapport entre la somme des sections transversales des particules et la surface totale de la couche.

Selon la présente divulgation, les déposants constatent qu'une telle surface nanostructurée génère des nouvelles apparences visuelles lorsque les particules sont distribuées aléatoirement tout en vérifiant la relation selon laquelle la distance moyenne d entre les deux centres de masse des particules qui sont les plus proches voisines vérifie la relation suivante : $2R \le d \le max(\lambda/n_p)$, où $n_p$ est l'indice de la couche de protection dans laquelle sont incorporées les nanoparticules. La distance entre les particules d doit être inférieure ou égale à la longueur d'onde effective pour observer les effets visuels. La longueur d'onde effective est la longueur d'onde vue par les particules incorporées dans la couche de protection. La longueur d'onde correspond donc à la plus grande longueur d'onde du spectre visible dans le matériau de la couche de protection. La distance entre les particules d doit être supérieure ou égale à 2R. La borne inférieure est imposée par le fait que les particules sont considérées comme impénétrables.

En raison du fort indice optique de réfraction, chaque particule permet de localiser la lumière à une échelle plus petite que la longueur d'onde visible. En raison de la forte localisation des particules, elles peuvent être placées les unes par rapport aux autres à une distance inférieure à la longue d'onde tout en formant des centres diffusants individuels. Lorsque les nanoparticules sont éclairées par un rayon lumineux visible incident RI, le rayon est réfléchi par les particules sous la forme des rayons diffusés RD et d'un rayon spéculaire RS. L'interférence entre les faisceaux diffusés par les particules permet de générer des couleurs vives de diffusion qui changent sur l'objet lorsque la direction de la lumière qui éclaire les particules change ou lorsque la direction d'observation des particules se déplace, générant ainsi l'effet d'iridescence.

La figure 2 montre dans le graphique (a) des spectres de réflectance diffuse et dans le graphique (b) des spectres de réflectance spéculaire calculés pour deux exemples de réalisation du revêtement de la figure 1. Selon un premier exemple de réalisation, les particules sont des sphères en silicium ayant un rayon géométrique R = 60 nm. Selon un deuxième exemple de réalisation, les particules sont des sphères en silicium ayant un rayon géométrique R = 95 nm. Dans les deux exemples de réalisation, elles sont distribuées aléatoirement sur la surface d'un substrat en verre tout en vérifiant le critère de la distance indiqué ci-dessus qui doit être supérieure ou égale à 2R. Dans l'exemple de réalisation où la particule a un rayon géométrique R = 60 nm, si on considère l'indice de la couche de protection $n_p$ = 1.5, et $\lambda$ = 740 nm comme limite supérieure du spectre visible en longueur d'onde, d doit être compris entre 120 nm et 493 nm. Le taux de remplissage surfacique f est égal à 10%. La lumière illumine la structure avec un angle d'incidence de 30° et elle est non polarisée.

Les deux spectres de la réflectance diffuse sur le graphique (a) montrent un déplacement des pics de résonance vers les grandes longueurs d'onde lorsque la taille des particules augmente. Pour le revêtement de surface nanostructurée qui comprend des nanoparticules de 60 nm, les pics de résonance se situent vers 440 et 520 nm. Dans l'exemple avec des nanoparticules de 95 nm, les pics de résonance se situent vers 600 et 750 nm. Les couleurs liées à la réflectance diffuse dépendent principalement du spectre de chacune des particules.

Les deux spectres de la réflectance spéculaire (b) montrent des résonances semblables.

Selon la présente divulgation, le revêtement de surface nanostructurée permet de générer des couleurs diffuses et spéculaires différentes les unes des autres suivant la direction d'éclairage de la lumière incidente et la direction d'observation.

En référence à la figure 3, un revêtement de surface nanostructurée 10 selon un deuxième mode de réalisation est décrit ci-dessous.

Le revêtement de surface nanostructurée comprend une première couche comprenant une distribution aléatoire de nanoparticules 20, un substrat 40 et une deuxième couche 30 agencée entre la première couche 20 et le substrat 40. Le substrat définit une surface dans un plan (X, Y). La deuxième couche 30 est déposée sur le substrat. L'ensemble de nanoparticules 20 sont distribuées de manière aléatoire à la surface de la deuxième couche 30.

Selon une première variante de ce deuxième mode de réalisation telle qu'illustrée sur la figure 3, la première couche de nanoparticules est formée uniquement d'un ensemble de nanoparticules distribuées de manière aléatoire à la surface de la deuxième couche 30.

Selon une deuxième variante de réalisation de l'invention non illustré, les particules sont incorporées dans une couche de protection qui s'étend dans le plan (X, Y). La couche de protection est réalisée dans un matériau d'indice de réfraction faible. A titre d'exemple, la couche de protection est en $SiO_2$ ou en plastique. La couche de protection présente une épaisseur comprise entre quelques centaines de nanomètres et plusieurs centaines de micromètres. Les nanoparticules sont d'abord déposées sur le substrat 40. Une fois la monocouche de nanoparticules réalisée, une couche de protection est déposée sur le substrat.

La deuxième couche 30, dite couche support de nanoparticules, est réalisée dans un matériau d'indice de réfraction $n_{sup}$ faible compris entre 1.3 et 2. Le matériau peut être choisi parmi les matériaux suivants : SiO2, TiO2, polymère, $Si_3N_4$, sol gels et des oxydes. Cette deuxième couche présente une épaisseur comprise entre 0 et 1 $\mu$m.

Selon un mode de réalisation de l'invention, la structure de la deuxième couche 30 est une structure multicouche.

Selon un exemple de réalisation, la deuxième couche 30 comprend une couche fine métallique semi-transparente ou opaque et une couche de $SiO_2$, avec la couche fine métallique déposée sur le substrat et la couche de nanoparticules déposée sur la couche de $SiO_2$ qui fait office de couche support.

Selon un autre exemple de réalisation et dans le cas où le substrat est un substrat classique en verre qui ne réfléchit pas, la deuxième couche 30 peut être un empilement de couches formant un miroir de Bragg ou un miroir diélectrique agencé entre le substrat 40 et la couche de nanoparticules 20. Dans cet exemple de réalisation, le substrat n'a pas besoin d'être réfléchissant et n'a donc pas besoin d'être constitué d'un matériau d'indice de réfraction élevé.

Le substrat est constitué d'un matériau de fort indice de réfraction compris entre 2 et 4 pour réfléchir et former l'image virtuelle 50 de la nanoparticule. Le matériau peut être un semiconducteur ou un métal.

Comme dans le premier mode de réalisation, les nanoparticules sont distribuées de manière aléatoire dans le plan (X, Y). Dans la direction Z qui est perpendiculaire au plan (X, Y), les particules présentent une épaisseur sensiblement constante et forment une monocouche de particules.

La présence du substrat a pour objet de stimuler l'interaction de la lumière avec les particules en formant des images 50 des particules dans le substrat comme indiqué sur la figure 3.

Les déposants constatent que la modification de l'épaisseur de la deuxième couche supportant les particules modifie également de manière significative le spectre de la réflectance diffuse, en générant des maximas et des minimas spectraux. Les déposants constatent que la nanostructure génère des nouvelles apparences visuelles lorsque l'épaisseur h de la deuxième couche 30 est inférieure ou égale à la longueur d'onde effective la plus grande du spectre visible dans la deuxième couche 30, soit : $0 \leq h \leq 2\max(\lambda/n_{sup})$, $n_{sup}$ étant l'indice de réfraction de la deuxième couche 30.

La figure 4 montre des courbes d'efficacité de rétrodiffusion calculées pour trois exemples de réalisation du revêtement illustré sur la figure 3. Dans les trois exemples de réalisation, les nanoparticules sont des sphères en argent ayant un rayon géométrique R = 90 nm. Le substrat est en silicium. La deuxième couche est une couche de $SiO_2$. Dans un premier exemple de réalisation, les nanoparticules sont déposées directement sur le substrat (h = 0). Les deux autres exemples de réalisation comprennent respectivement une deuxième couche d'épaisseur h = 400 nm et une deuxième couche d'épaisseur h = 600 nm. Dans les trois exemples de réalisation, les nanoparticules sont distribuées aléatoirement sur la surface du substrat ou sur la deuxième couche tout en vérifiant le critère de la distance indiqué ci-dessus qui doit être supérieure ou égale à 2R. Dans les trois exemples de réalisation, le taux de remplissage f est de 10%.

Les trois courbes montrent que le spectre de diffusion de la lumière varie lorsque l'épaisseur h varie. Plus précisément, l'augmentation de l'épaisseur h induit des maximas et des minimas spectraux plus significatifs, résultant de l'interférence entre la lumière diffusée par les nanoparticules et la lumière réfléchie plusieurs fois par le substrat dans la deuxième couche, au niveau des interfaces air/ couche et deuxième couche/substrat. L'air représente le milieu dans lequel sont dispersées les nanoparticules à la surface de la deuxième couche. Lorsque la surface nanostructurée est éclairée, il y a une interférence entre les rayons diffusés par les nanoparticules et leurs images formés dans la deuxième couche.

L'épaisseur de la deuxième couche h fait varier la distance entre les images et donc les interférences.

La figure 5 montre des diagrammes de diffusion d'une nanoparticule avec l'angle d'incidence $\theta_i$ = 30° et la longueur d'onde $\lambda$ = 440 nm. Les lobes angulaires apparaissent lorsque l'épaisseur h de la seconde couche augmente, allant de 0 à 600 nm.

Les déposants ont simulé les apparences visuelles de revêtements appliqués sur un objet sphérique en faisant varier l'épaisseur h à partir d'un modèle de BRDF (bidirectional reflectance distribution function). Ils constatent que lorsque l'épaisseur h de la deuxième couche augmente, des couleurs vives et diffuses apparaissent à partir d'un gris bleuâtre pâle en raison des modifications des spectres de diffusion et des diagrammes de diffusion montrées sur les figures 4 et 5.

La figure 6 montre des images d'apparence visuelle simulée pour deux sphères munies respectivement d'un revêtement sans la présence de la deuxième couche et avec une deuxième couche d'épaisseur h = 600 nm. Sur la sphère sans la présence de la deuxième couche, la couleur due aux nanoparticules en argent est gris bleuâtre pâle. Sur la sphère avec une deuxième couche de 600 nm, on voit apparaître des zones de couleurs vives qui sont représentées par des zones sombres. Les nanoparticules sont dispersées de manière aléatoire avec un taux de remplissage f = 10%, correspondant à une densité surfacique $\rho$ = 4 $\mu m^{-1}$. Les déposants constatent que les zones de couleurs vives, représentées par des zones plus sombres apparaissent au fur à mesure que l'épaisseur du film h augmente.

Les déposants constatent également que l'apparence visuelle d'un objet non sphérique muni d'un revêtement avec une deuxième couche d'épaisseur non nulle varie en fonction de la direction de la lumière d'incidence et de la direction d'observation, donnant ainsi un effet « d'iridescence diffuse ».

La figure 7 montre des simulations d'apparence visuelle pour un revêtement avec une deuxième couche d'épaisseur h = 600 nm suivant trois positions d'observation qui sont représentées par trois caméras virtuelles et pour deux différentes positions d'éclairage. Les déposants constatent que deux couleurs diffuses vert et violet sont générées. La première apparaît pour les petits angles d'incidence et la seconde pour les grands angles d'incidence. La présence des nanoparticules dispersées aléatoirement à la surface de la deuxième couche combinée avec une épaisseur finie de la deuxième couche permet d'obtenir deux couleurs différentes sur un même objet. Un tel effet visuel ne peut pas être généré avec les solutions de l'état de la technique qui sont basées principalement sur des structures multicouches qui produisent uniquement des interférences liées aux interfaces.

En référence à la figure 8, un revêtement selon un troisième mode de réalisation de l'invention est décrit ci-dessous.

Comme dans le cas du premier mode de réalisation, le revêtement de surface nanostructurée comprend une première couche comprenant une distribution aléatoire de de nanoparticules et un substrat, la première couche étant agencée sur le substrat.

Dans une première variante, la première couche est formée uniquement de nanoparticules sans la couche de protection.

Dans une deuxième variante, la première couche est formée de nanoparticules incorporées dans une couche de protection.

Les déposants constatent que les corrélations structurelles entre les nanoparticules ont un impact sur l'apparence visuelle. Plus précisément, les déposants montrent qu'il est possible de générer des apparences nouvelles en contrôlant les corrélations structurelles, c'est-à-dire en forçant les particules à rester à une distance $d_{excl}$ minimale les unes des autres selon la relation $d_{excl} = 2R_{excl}$ de centre à centre, $R_{excl}$ étant un rayon d'exclusion qui définit un espace autour de la nanoparticule qui exclut la présence d'autres nanoparticules. Le contrôle de la corrélation se traduit via le contrôle du degré de corrélation p qui est défini à partir du rayon d'exclusion $R_{excl}$ de la particule selon la relation suivante : p = $\rho\pi R_{excl}^2$, où $\rho$ est la densité surfacique d'un ensemble de particules sensiblement égale à $1/d_{excl}^2$.

Les déposants constatent que la nanostructure génère des nouvelles apparences visuelles lorsque le degré de corrélation p vérifie la relation suivante : $\rho\pi R_{excl}^2 \leq p \leq 0.69$. La limite supérieure 0.69 est la limite au-delà de laquelle les nanoparticules ne sont plus considérées comme un système désordonné puisqu'elles forment des petits amas périodiques. Lorsque p est proche de 0.90, le système peut être considéré comme un système périodique. Dans l'exemple de réalisation où la particule a un rayon géométrique R= 60 nm et $d_{excl}$ = 300 nm, on obtient une densité $\rho$ = 12.8 $\mu m^{-1}$ et le degré de corrélation structurelle p doit être compris entre 0.145 et 0.69 afin de pouvoir contrôler la corrélation structurelle pour générer des nouvelles apparences visuelles.

La figure 8 illustre une vue de dessus d'une surface comprenant des nanoparticules dispersées avec un degré de corrélation p = 0.1 et une surface comprenant des nanoparticules avec un degré de corrélation p = 0.5 pour une densité surfacique $\rho$ identique.

La figure 9 montre le facteur structurel S calculé pour différents degrés de corrélation en fonction du vecteur d'onde de diffusion dans le plan q∥. Les courbes montrent que la corrélation structurelle S peut supprimer ou augmenter la diffusion. En augmentant le degré de corrélation, le facteur S est sensiblement nul autour de la direction spéculaire (q∥ = 0) et augmente aux vecteurs d'onde supérieurs.

La figure 10 montre les apparences visuelles simulées de deux sphères recouvertes d'un revêtement de surface nanostructurée pour différents degrés de corrélation. Le revêtement comprend des nanoparticules d'argent déposées sur un substrat en verre avec un taux de remplissage f = 0.1. En augmentant le degré de corrélation, il est possible de générer des nouveaux effets visuels, et notamment de faire apparaître dans la zone 61 recouverte de nanoparticules autour de la direction spéculaire un gradient de couleur différents de celui rencontré dans l'arc-en-ciel.

La figure 11 montre des simulations d'apparence visuelle pour un revêtement avec un degré de corrélation p = 0.5 suivant trois positions d'observation qui sont représentées par trois caméras virtuelles et pour deux différentes positions d'éclairage. Contrairement à l'effet d'iridescence diffus obtenu dans l'exemple de réalisation illustré sur la figure 7, les couleurs générées suivent toujours la direction spéculaire. Les régions sombres apparaissent toujours lorsque l'angle d'observation et la direction spéculaire sont confondues.

**Application industrielle**

Le revêtement de surface nanostructurée de la présente invention permet de générer des nouvelles apparences visuelles en contrôlant l'épaisseur h de la couche supportant les particules, la distance entre deux particules d et le degré de corrélation structurelle p à l'échelle de la longueur d'onde du spectre visible. Un tel revêtement de surface nanostructurée peut être utilisé dans divers domaines industriels dans lesquels l'apparence visuelle est essentielle afin de rendre l'objet plus esthétique tout en s'affranchissant des contraintes techniques, tels que l'industrie automobile, le domaine de cosmétique, l'industrie de l'emballage, l'impression.

**Revendications**

1. Revêtement de surface nanostructurée (1) configuré pour générer des apparences visuelles dans une bande spectrale visible, ledit revêtement comprenant :

    - une première couche comprenant une distribution aléatoire de nanoparticules (2) ;
    - un substrat (3) sur lequel est agencée la première couche;
    - les nanoparticules ayant un indice optique de réfraction $n_{part}$ présentant une valeur adaptée pour diffuser chacune individuellement la lumière incidente ;
    le revêtement étant **caractérisé en ce que**
    - les nanoparticules sont agencées de sorte que la distance moyenne entre deux particules voisines d est définie selon la relation suivante de manière à produire une interférence entre la lumière diffusée par les particules:

    $$2 R \leq d \leq \max (\lambda / n_p),$$

    R : le rayon géométrique le plus petit d'un cercle englobant la particule

λ : la longueur d'onde la plus grande du spectre visible

$n_p$ : l'indice de réfraction optique du milieu de la première couche dans laquelle sont dispersées les nanoparticules.

2. Revêtement de surface nanostructurée selon la revendication 1, comprenant en outre une deuxième couche (30) agencée entre le substrat (40) et la première couche de nanoparticules :

- ladite deuxième couche (30) ayant une épaisseur h inférieure ou égale à la longueur d'onde la plus grande de la bande spectrale dans la deuxième couche :

$$0 \leq h \leq \max(\lambda/n_{sup}),$$

$n_{sup}$ étant l'indice de réfraction de la deuxième couche.

3. Revêtement de surface nanostructurée selon la revendication 2, dans lequel la deuxième couche est réalisée dans un matériau dont l'indice de réfraction est compris entre 1,3 et 2 et choisi parmi les matériaux suivants : $SiO_2$, sol gel, $TiO_2$, $Sl_3N_4$, des polymères et des oxydes.

4. Revêtement de surface nanostructurée selon l'une des revendications 1 à 3, dans lequel le substrat est réalisé dans un matériau dont l'indice de réfraction est compris entre 1,3 et 4 et choisi parmi les matériaux suivants : Si, AsGa, quartz, silice, des polymères.

5. Revêtement de surface nanostructurée selon l'une des revendications 1 à 4, dans lequel le matériau formant la première couche dans laquelle sont dispersées les nanoparticules a un indice de réfraction $n_p$ compris entre 1 et 2, $n_p$ étant choisi de manière à être inférieur à l'indice de réfraction des nanoparticules.

6. Revêtement de surface nanostructurée selon l'une des revendications 1 à 5, dans lequel les nanoparticules sont agencées de sorte que le degré de corrélation p entre les particules est contrôlé selon la relation suivante :

$$\rho\pi R^2 \leq p \leq 0.69$$

p est définie par la relation suivante : $\rho\pi R^2_{excl}$, $R_{excl}$ étant le rayon d'exclusion définissant un espace autour de la nanoparticule qui exclut la présence d'une autre nanoparticule ;

R: le rayon géométrique le plus petit d'un cercle englobant la particule ;

ρ : densité surfacique d'un ensemble de particules définie par la relation $1/d^2$, où d étant la distance moyenne entre deux centres de masse des particules qui sont les plus proches voisines.

7. Revêtement de surface nanostructurée selon l'une des revendications 1 à 6, dans lequel les nanoparticules sont réalisées dans un matériau dont l'indice de réfraction est supérieur ou égal à 1,4.

8. Revêtement de surface nanostructurée selon la revendications 7, dans lequel
les nanoparticules sont réalisées dans un matériau diélectrique ou métallique choisi parmi l'un des matériaux suivants : argent, or, aluminium, silicium, germanium, dioxyde de titane, polymère, nitrure de silicium.

9. Revêtement de surface nanostructurée selon l'une des revendications 1 à 8, dans lequel les nanoparticules présentent une forme cylindrique, une forme sphérique, une forme cubique ou tout autre forme géométrique.

10. Revêtement de surface nanostructurée selon l'une des revendications précédentes, dans lequel les nanoparticules présentent un taux de remplissage surfacique f compris entre 5 et 30 %.

**Patentansprüche**

1. Nanostrukturierte Oberflächenbeschichtung (1), welche dazu ausgebildet ist, visuelle Erscheinungen in einem sichtbaren Spektralband zu erzeugen, wobei die Beschichtung umfasst:

- eine erste Schicht mit einer Zufallsverteilung von Nanopartikeln (2),
- ein Substrat (3), auf dem die erste Schicht angeordnet ist,
- wobei die Nanopartikel einen optischen Brechungsindex $n_{part}$ mit einem Wert aufweisen, der dazu geeignet ist, das einfallende Licht jeweils einzeln zu streuen,
wobei die Beschichtung **dadurch gekennzeichnet ist, dass**
- die Nanopartikel derart angeordnet sind, dass der mittlere Abstand zwischen zwei benachbarten Partikeln d gemäß der folgenden Beziehung definiert ist, um eine Interferenz zwischen dem von den Partikeln gestreuten Licht zu erzeugen:

$$2R \leq d \leq \max(\lambda/n_p),$$

wobei gilt

R: ist der kleinste geometrische Radius eines Kreises, der den Partikel einschließt,
$\lambda$: ist die größte Wellenlänge im sichtbaren Spektrum,
$n_p$: ist der optische Brechungsindex des Mediums der ersten Schicht, in der die Nanopartikel dispergiert sind.

2. Nanostrukturierte Oberflächenbeschichtung nach Anspruch 1, ferner umfassend eine zweite Schicht (30), die zwischen dem Substrat (40) und der ersten Schicht Nanopartikel angeordnet ist:

- wobei die zweite Schicht (30) eine Dicke h aufweist, die kleiner oder gleich der größten Wellenlänge des Spektralbandes in der zweiten Schicht ist:
$0 \leq h \leq \max (\lambda/n_p)$, wobei $n_{sup}$ der Brechungsindex der zweiten Schicht ist.

3. Nanostrukturierte Oberflächenbeschichtung nach Anspruch 2, wobei die zweite Schicht aus einem Material gefertigt ist, dessen Brechungsindex zwischen 1,3 und 2 liegt und das aus den folgenden Materialien gewählt ist: SiOz, Sol-Gel, $TiO_2$, $Sl_3N_4$, Polymere und Oxide.

4. Nanostrukturierte Oberflächenbeschichtung nach einem der Ansprüche 1 bis 3, wobei das Substrat aus einem Material besteht, dessen Brechungsindex zwischen 1,3 und 4 liegt und das aus den folgenden Materialien gewählt ist: Si, AsGa, Quarz, Siliziumdioxid, Polymere.

5. Nanostrukturierte Oberflächenbeschichtung nach einem der Ansprüche 1 bis 4, wobei das Material, das die erste Schicht bildet, in der die Nanopartikel dispergiert sind, einen Brechungsindex $n_p$ zwischen 1 und 2 aufweist, wobei $n_p$ derart gewählt ist, dass es kleiner ist als der Brechungsindex der Nanopartikel.

6. Nanostrukturierte Oberflächenbeschichtung nach einem der Ansprüche 1 bis 5, wobei die Nanopartikel derart angeordnet sind, dass der Korrelationsgrad p zwischen den Partikeln gemäß der folgenden Beziehung gesteuert wird:

$$p\pi R^2 \leq p \leq 0.69$$

wobei p durch folgende Beziehung definiert ist:
$\rho\pi R^2_{excl}$, wobei $R_{excl}$ der Ausschlussradius ist, der einen Raum um den Nanopartikel definiert, der die Anwesenheit eines anderen Nanopartikels ausschließt,

R: ist der kleinste geometrische Radius eines Kreises, der den Partikel einschließt,
p: ist die Flächendichte einer Gruppe von Partikeln, die durch die Beziehung $1/d^2$ definiert ist, wobei d der mittlere Abstand zwischen zwei Massenzentren der Partikel ist, die die nächsten Nachbarn sind.

7. Nanostrukturierte Oberflächenbeschichtung nach einem der Ansprüche 1 bis 6, wobei die Nanopartikel aus einem Material mit einem Brechungsindex von 1,4 oder mehr hergestellt sind.

8. Nanostrukturierte Oberflächenbeschichtung nach Anspruch 7, wobei die Nanopartikel aus einem dielektrischen oder metallischen Material hergestellt sind, das aus einem der folgenden Materialien gewählt ist: Silber, Gold, Aluminium, Silizium, Germanium, Titandioxid, Polymer, Siliziumnitrid.

9. Nanostrukturierte Oberflächenbeschichtung nach einem der Ansprüche 1 bis 8, wobei die Nanopartikel eine zylindrische Form, eine Kugelform, eine kubische Form oder eine andere geometrische Form aufweisen.

10. Nanostrukturierte Oberflächenbeschichtung nach einem der vorhergehenden Ansprüche, wobei die Nanopartikel einen Flächenfüllgrad f zwischen 5 und 30 % aufweisen.

**Claims**

1. A nanostructured surface coating (1) configured to generate visual appearances in a visible spectral band, said coating comprising:

- a first layer comprising a random distribution of nanoparticles (2);
- a substrate (3) on which the first layer is arranged;
- nanoparticles having an optical refractive index $n_{part}$ having a value suitable for each one individually to scatter the incident light;
the coating being **characterized in that**
- the nanoparticles are arranged so that the average distance between two neighbouring particles d is defined according to the following relationship so as to produce interference between the light scattered by the particles:

$$2 R \leq d \leq \max (\lambda / n_p),$$

R: the smallest geometric radius of a circle enclosing the particle
$\lambda$: the longest wavelength of the visible spectrum

$n_p$: the optical refractive index of the medium of the first layer in which the nanoparticles are dispersed.

2. The nanostructured surface coating as claimed in claim 1, further comprising a second layer (30) arranged between the substrate (40) and the first layer of nanoparticles:

- said second layer (30) having a thickness h less than or equal to the longest wavelength of the spectral band in the second layer:
$0 \leq h \leq max\ (\lambda/n_{sup})$, $n_{sup}$ being the refractive index of the second layer.

3. The nanostructured surface coating as claimed in claim 2, wherein the second layer is made of a material having a refractive index of between 1.3 and 2 and chosen from the following materials: $SiO_2$, sol gel, $TiO_2$, $Si_3N_4$, polymers and oxides.

4. The nanostructured surface coating as claimed in one of claims 1 to 3, wherein the substrate is made of a material having a refractive index of between 1,3 and 4 and chosen from the following materials: Si, AsGa, quartz, silica, polymers.

5. The nanostructured surface coating as claimed in one of claims 1 to 4, wherein the material forming the first layer in which the nanoparticles are dispersed has a refractive index $n_p$ between 1 and 2, $n_p$ being chosen so as to be lower than the refractive index of the nanoparticles.

6. The nanostructured surface coating as claimed in one of claims 1 to 5, wherein the nanoparticles are arranged so that the degree of correlation p between the particles is controlled according to the following relationship:

$$\rho\pi R^2 \leq p \leq 0.69$$

p is defined by the following relationship: $\rho\pi R^2_{excl}$, $R_{excl}$ being the exclusion radius defining a space around the nanoparticle which excludes the presence of another nanoparticle;
R: the smallest geometric radius of a circle enclosing the particle;
p: surface density of a set of particles defined by the relationship $1/d^2$, where d is the average distance between two centers of mass of the particles which are the nearest neighbours.

7. The nanostructured surface coating as claimed in one of claims 1 to 6, wherein the nanoparticles are made of a material having a refractive index of greater than or equal to 1,4.

8. The nanostructured surface coating of claims 7, wherein the nanoparticles are made of a dielectric or metallic material chosen from one of the following materials: silver, gold, aluminium, silicon, germanium, titanium dioxide, polymer, silicon nitride.

9. The nanostructured surface coating as claimed in one of claims 1 to 8, wherein the nanoparticles have a cylindrical shape, a spherical shape, a cubic shape or any other geometric shape.

10. The nanostructured surface coating as claimed in one of the preceding claims, wherein the nanoparticles have a surface fill factor f of between 5% and 30%.

[Fig. 1]

[Fig. 2]

EP 4 284 625 B1

[Fig. 3]

[Fig. 4]

12

[Fig. 5]

[Fig. 6]

h (nm)

[Fig. 7]

[Fig. 8]

[Fig. 9]

Vecteur d'onde réduit

[Fig. 10]

[Fig. 11]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3073321 A1